# EUROPÄISCHE PATENTANMELDUNG

(11) **EP 4 624 207 A1**
(43) Veröffentlichungstag der Anmeldung: **01.10.2025**
(21) Anmeldenummer: 25160404.7
(22) Anmeldetag: 26.02.2025
(51) Int. Cl.: B60H 1/28, B62D 25/08

(54) **KRAFTFAHRZEUG MIT EINEM WASSERKASTEN UND BEIDSEITS EINER LÄNGSMITTELACHSE DES KRAFTFAHRZEUGS AUSGEBILDETER ANSAUGÖFFNUNG IN EINEM DECKELELEMENT DES WASSERKASTENS**

(30) Priorität: 25.03.2024 DE 102024108414
(71) Anmelder: AUDI AG, 85057 Ingolstadt (DE)
(72) Erfinder: Albl, Sebastian, 01689 Weinböhla (DE); Behle, Christoph, 85309 Pörnbach (DE); Khobeiz, Amr, 81248 München (DE); Paur, Frantisek, 29306 Kosmonosy (CZ); Welz, Stefan, 85051 Ingolstadt (DE)

(57) **Zusammenfassung**

Kraftfahrzeug (10) mit verbrennungsmotorischem oder/und elektrischem Antrieb, das Kraftfahrzeug (10) aufweisend eine Windschutzscheibe (12), einen vor der Windschutzscheibe (12) angeordneten Wasserkasten (26), der dazu eingerichtet ist, in einem Übergangsbereich (28) von der Windschutzscheibe (12) und einer Fronthaube anfallendes Wasser aufzufangen und abzuleiten, wobei der Wasserkasten (26) ein Bodenelement und ein Deckelelement (32) aufweist, die einen Ansaugraum für Frischluft bilden, einen Frischlufteinlass einer Klimatisierungseinheit, der mit dem Ansaugraum in Fluidverbindung steht, wobei das Deckelement (32) eine entlang der Windschutzscheibe (12) verlaufende Schwallwand (34) aufweist mit einem zur Windschutzscheibe (12) zugewandten Schwallwandkanal zur Ableitung von Wasser zu beiden Seiten des Kraftfahrzeugs (10), wobei in dem Deckelelement (32) eine Ansaugöffnung (36) für Frischluft ausgebildet ist, wobei in dem Bodenelement ein Wasserauffangbecken mit einer Bodenfläche ausgebildet ist, und wobei die Ansaugöffnung (36) bezogen auf eine Breitenrichtung (Y) des Kraftfahrzeugs (10) beidseits einer Längsmittelachse (MA) des Kraftfahrzeugs (10) ausgebildet ist.

## Beschreibung

Die Erfindung betrifft ein Kraftfahrzeug mit verbrennungsmotorischem oder/und elektrischem Antrieb, wobei das Kraftfahrzeug aufweist: eine Windschutzscheibe; einen vor der Windschutzscheibe angeordneten Wasserkasten, der dazu eingerichtet ist, in einem Übergangsbereich von der Windschutzscheibe und einer Fronthaube anfallendes Wasser aufzufangen und abzuleiten; wobei der Wasserkasten ein Bodenelement und ein Deckelelement aufweist, die einen Ansaugraum für Frischluft bilden; einen Frischlufteinlass einer Klimatisierungseinheit, der mit dem Ansaugraum in Fluidverbindung steht; wobei das Deckelelement eine entlang der Windschutzscheibe verlaufende Schwallwand aufweist mit einem zur Windschutzscheibe zugewandten Schwallwandkanal zur Ableitung von Wasser zu beiden Seiten des Kraftfahrzeugs; wobei in dem Deckelelement eine Ansaugöffnung für Frischlauft ausgebildet ist; und wobei in dem Bodenelement ein Wasserauffangbecken mit einer Bodenfläche ausgebildet ist;

Ein solches Kraftfahrzeug ist beispielweise aus der EP 2 236 332 A2 bekannt. Ferner wird auch auf die DE 40 12 568 C1 hingewiesen, die ebenfalls ein Kraftfahrzeug mit einem Wasserkasten offenbart.

Bislang hatten bekannte Kraftfahrzeuge ein ausreichend großes Prestigemaß, um einen hinsichtlich Durchströmungsparametern geeigneten Frischluftweg bereitstellen zu können. Der Frischluftweg wird dabei insbesondere mittels der Bauteile Schottwände (Wasserkasten-Boden, Wasserkasten-Vorderwand, Wasserkasten-Abdeckung), Stirnwand zwischen Innenraum und Motorraum und Federbeinaufnahmen definiert. Dabei soll die Frischluft in Breitenrichtung des Kraftfahrzeugs durch den in Höhenrichtung tiefen, zerklüfteten Wasserkasten nach außen (zur Seite hin) zu dem Frischlufteinlass des Klimagerätes bzw. der Klimatisierungseinheit strömen, um eine maximale Wasserabscheidung zu ermöglichen. Die Klimatisierungseinheit ist insbesondere lenkungsabhängig auf der Beifahrerseite angeordnet, wobei der Frischluftweg ebenfalls lenkungsspezifisch von Fahrer- zur Beifahrerseite ausgeführt ist. Bei bekannten Wasserkästen hat sich gezeigt, dass durch die Ansaugöffnung in der Wasserkastenabdeckung (Deckelement) sehr viel Wasser aufgenommen wird, das erst innerhalb des Wasserkastens abgeschieden wird.

Durch das sogenannte Cab-forward-Design für ein vergrößertes Innenraumvolumen und Anforderungen bezüglich einer flachen Fronthaube ist eine Luftstrecke mit ausreichend guten Durchströmungsparametern und Wasserabscheidung insbesondere in der bisherigen Längs- und Höhen-Ausdehnung nicht mehr möglich.

Die der Erfindung zu Grunde liegende Aufgabe wird darin gesehen, ein Kraftfahrzeug mit Wasserkasten anzugeben, bei dem die obigen Nachteile vermieden werden können, wobei bei geringem Raumangebot eine zuverlässige Wasserabscheidung bereitgestellt werden soll, insbesondere
bei ausreichend niedrigen Strömungsgeschwindigkeiten und möglichst großen Strömungsquerschnitten für die angesaugte Außenluft.

Diese Aufgabe wird gelöst durch ein Kraftfahrzeug mit den Merkmalen des unabhängigen Patentanspruchs. Vorteilhafte Ausgestaltungen mit zweckmäßigen Weiterbildungen sind in den abhängigen Patentansprüchen angegeben.

Vorgeschlagen wird also ein Kraftfahrzeug mit verbrennungsmotorischem oder/und elektrischem Antrieb, wobei das Kraftfahrzeug aufweist: eine Windschutzscheibe; einen vor der Windschutzscheibe angeordneten Wasserkasten, der dazu eingerichtet ist, in einem Übergangsbereich von der Windschutzscheibe und einer Fronthaube anfallendes Wasser aufzufangen und abzuleiten; wobei der Wasserkasten ein Bodenelement und ein Deckelelement aufweist, die einen Ansaugraum für Frischluft bilden; einen Frischlufteinlass einer Klimatisierungseinheit, der mit dem Ansaugraum in Fluidverbindung steht; wobei das Deckelement eine entlang der Windschutzscheibe verlaufende Schwallwand aufweist mit einem zur Windschutzscheibe zugewandten Schwallwandkanal zur Ableitung von Wasser zu beiden Seiten des Kraftfahrzeugs; wobei in dem Deckelelement eine Ansaugöffnung für Frischluft ausgebildet ist; und wobei in dem Bodenelement ein Wasserauffangbecken mit einer Bodenfläche ausgebildet ist. Dabei ist vorgesehen, dass die Ansaugöffnung bezogen auf eine Breitenrichtung des Kraftfahrzeugs beidseits einer Längsmittelachse des Kraftfahrzeugs ausgebildet ist.

Durch die Anordnung der Ansaugöffnung in einem zentralen bzw. mittigen Bereich, insbesondere beidseits der Längsmittelachse der Kraftfahrzeugs, kann im Zusammenwirken mit der entlang der Windschutzscheibe verlaufenden Schwallwand das Eintreten von größeren Wassermengen in den Ansaugraum für Frischluft vermieden bzw. verhindert werden.

Bei dem Kraftfahrzeug kann die Ansaugöffnung einen nach oben hin vorstehenden, umlaufenden Randvorsprung aufweisen. Ein solcher Randvorsprung, der auch als umlaufender Steg bezeichnet werden kann, bildet ein weiteres Element, um das Eindringen von Wasser durch die Ansaugöffnung zu vermeiden.

Bei dem Kraftfahrzeug können die Ansaugöffnung und die Bodenfläche des Wasserauffangbeckens im Wesentlichen die gleiche Form aufweisen, insbesondere eine trapezförmige Ausgestaltung aufweisen.

Insbesondere können die Ansaugöffnung und das Wasserauffangbecken übereinander angeordnet sein, insbesondere derart, dass die Ansaugöffnung und die Bodenfläche fluchtend oder im Wesentlichen kongruent zueinander angerichtet sind.

Hierdurch ist sichergestellt, dass durch die Ansaugöffnung trotzdem eintretendes Wasser oder ggf. durch Luftströmungen in den Ansaugraum mitgerissene Wassertropfen direkt unterhalb der Ansaugöffnung aufgefangen bzw. abgeschieden werden können.

Bei dem Kraftfahrzeug kann die Bodenfläche des Wasserauffangbeckens in Längsrichtung und in Breitenrichtung der Kraftfahrzeugs geneigt verlaufen. Hierdurch wird sichergestellt, dass sich in dem Wasserauffangbecken sammelndes Wasser zu einem tiefsten Punkt geleitet werden kann. Insbesondere kann die Bodenfläche für die Wasserabscheidung in eine Richtung stetig geneigt sein.

Dabei kann an einem tiefsten Punkt, insbesondere in einem Eckbereich der Bodenfläche ein Ablauf angeordnet sein zum Abführen von in dem Wasserauffangbecken aufgefangenem Wasser. Ein solcher Ablauf ist insbesondere an einem tiefsten Punkt des Wasserauffangbeckens angeordnet, so dass das Wasser zuverlässig aus dem Wasserkasten abgeleitet werden kann.

Hierzu kann an dem Ablauf des Wasserauffangbeckens beispielweise eine Wasserleitung, etwa in Form eines Schlauches oder eines insbesondere verformbaren Rohres angeschlossen sein, so dass das Wasser an weiteren Fahrzeugkomponenten, insbesondere auch elektrischen Komponenten, vorbei zur Umgebung abgeleitet werden kann.

Bei dem Kraftfahrzeug können vor der Windschutzscheibe mehrere Streben angeordnet sein, die geneigt zueinander ausgerichtet sind und zwischen sich einen vieleckigen Aufnahmeraum definieren.

Derartige Streben können insbesondere an Karosseriebauteilen des Kraftfahrzeugs befestigt sein, etwa im Bereich der seitlichen Federbeindome oder/und im Bereich eines Querträgers oder einer Trennwand, die den Fahrzeuginnenraum von dem Motorraum trennt. Die Streben können daher auch als Karosserieverstrebungen bezeichnet werden.

Dabei kann das Bodenelement durch die Streben abgestützt sein und die Bodenfläche kann in dem durch die Streben gebildeten Aufnahmeraum angeordnet sein.

Hierdurch kann der durch die Streben gebildete Aufnahmeraum optimal genutzt werden, um darin das Wasserauffangbecken des Wasserkastens unterbringen zu können.

Bei dem Kraftfahrzeug kann die Bodenfläche des Bodenelements eine Form aufweisen, die bei einem linksgelenkten Kraftfahrzeug und bei einem rechtsgelenkten Kraftfahrzeug im Wesentlichen gleich, insbesondere identisch ist. Mit anderen Worten kann die Bodenfläche des Bodenelements lenkungsunabhängig ausgeführt sein.

Hierdurch ist es beispielweise möglich, dass die Ansaugöffnung und das Wasserauffangbecken lenkungsunabhängig jeweils an der gleichen Stelle des Kraftfahrzeugs, insbesondere an der gleichen Position in Bezug auf die oben genannten Streben angeordnet bzw. untergebracht sind.

Bei dem Kraftfahrzeug kann das Bodenelement des Wasserkastens derart ausgebildet sein, dass es oberhalb eines vor den Windschutzscheibe angeordneten Bremssystems der Kraftfahrzeugs angeordnet ist.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte und schematische Draufsicht auf einen vorderen Teils eines Kraftfahrzeugs mit Windschutzscheibe und Fronthaube;
- Fig. 2: eine zur Fig. 1 ähnliche Draufsicht ohne Fronthaube mit Blick auf einen Wasserkasten;
- Fig. 3: eine vereinfachte und schematische Schnittansicht etwa entsprechend der Schnittlinie III-III der Fig. 1 und 2;
- Fig. 4: eine vereinfachte und schematische Schnittansicht etwa entsprechend der Schnittlinie IV-IV der Fig. 2;
- Fig. 5: eine vereinfachte und schematische Perspektivansicht auf den vorderen Teil des Kraftfahrzeugs;
- Fig. 6: eine vereinfachte und schematische Perspektivansicht auf den vorderen Teil des Kraftfahrzeugs;
- Fig. 7: eine vereinfachte und schematische Draufsicht auf ein Bodenelement des Wasserkastens an einem linksgelenkten Kraftfahrzeug;
- Fig. 8: eine vereinfachte und schematische Draufsicht auf ein Bodenelement des Wasserkastens an einem rechtsgelenkten Kraftfahrzeug.

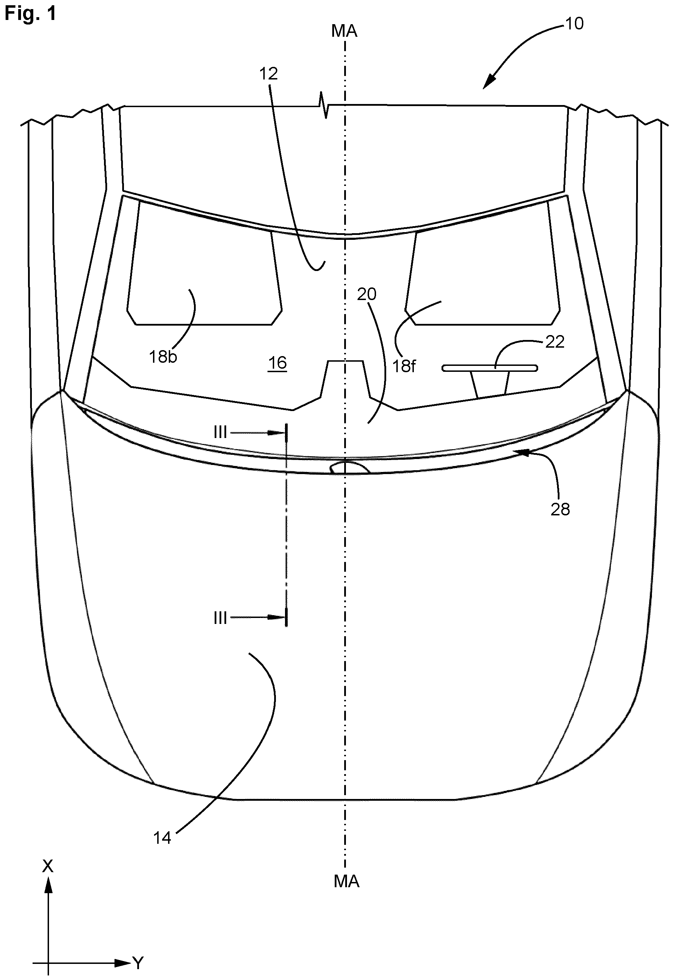

In Fig. 1 ist vereinfacht und schematisch eine Draufsicht auf einen vorderen Teil eines Kraftfahrzeugs 10 dargestellt. Von dem Kraftfahrzeug 10 sind in dieser Ansicht eine Windschutzschiebe 12 (auch als Frontscheibe bezeichnet) und eine Fronthaube 14 ersichtlich.

Hinter der Windschutzscheibe 12 befindet sich ein Innenraum 16 des Kraftfahrzeugs 10. In diesem sind vereinfacht ein Fahrersitz 18f und ein Beifahrersitz 18b dargestellt sowie eine Konsole 20 und ein Lenkrad 22.

In der Fig. 1 und auch in den nachfolgenden Figuren sind eine Längsrichtung des Kraftfahrzeugs mit X, eine Breitenrichtung mit Y und eine Höhenrichtung (orthogonal zu X und Y) mit Z bezeichnet. In der Fig. 1 ist ferner eine gedachte Längsmittelachse MA des Kraftfahrzeugs 10 als strichpunktierte Linie dargestellt.

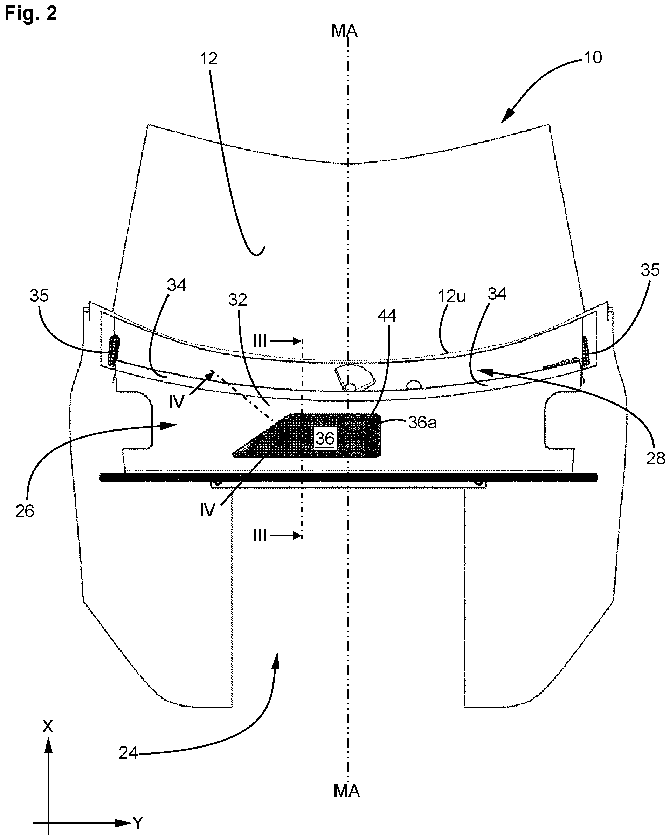

Die Fronthaube 14 deckt einen üblicherweise technische Komponenten enthaltenden Bauraum auf 24 (Fig. 2), insbesondere für einen Antriebsmotor, elektronische oder/und hydraulische Systeme, wie etwa ein Bremssystem, eine Kälteanlage oder dergleichen.

Fig. 2 zeigt eine Draufsicht ähnlich zu derjenigen der Fig. 1, wobei die Fronthaube 14 und weitere in Fig. 1 dargestellte Teile des Kraftfahrzeugs 10 nicht erneut gezeigt sind. Der Blick auf den Bauraum 24 ist aufgrund der nicht dargestellten Fronthaube 14 freigegeben, wobei keine darin angeordneten technischen Komponenten dargestellt sind.

Aus der Fig. 2 ist ein vor der Windschutzscheibe 12 angeordneter Wasserkasten 26 ersichtlich, der dazu eingerichtet ist, in einem Übergangsbereich 28 (Fig. 1) von der Windschutzscheibe 12 und der Fronthaube 14 anfallendes Wasser aufzufangen und abzuleiten.

Der Wasserkasten 26 weist ein Fig. 2 nicht sichtbares Bodenelement 30 und ein Deckelelement 32 auf. Das Deckelelement 32 weist eine entlang der Windschutzscheibe 12, insbesondere entlang deren Unterkante 12u, verlaufende Schwallwand 34 auf. In dem Deckelelement 32 ist eine Ansaugöffnung 36 für Frischluft ausgebildet ist.

Die Ansaugöffnung 36 weist üblicherweise eine gitter- oder siebartige Abdeckung 36a auf, um den Eintritt von größeren Partikeln oder Laub zu vermeiden.

Die Schwallwand 34 ist durchgehend von einer linken Seite zu einer rechten Seite des Kraftfahrzeugs 10 ausgebildet. Insbesondere weist die Schwallwand 34 in Breitenrichtung Y eine gebogene Länge auf, die im Wesentlichen einer gebogenen Länge der Unterkante 12u der Windschutzscheibe 12 entspricht oder geringfügig kürzer ist, insbesondere mindestens 80% der gebogenen Länge der Unterkante 12u. Um Wasser, das mittels der Schwallwand 34 umgelenkt wird, seitlich abführen zu können, sind seitliche Ablauföffnungen 35 vorgesehen.

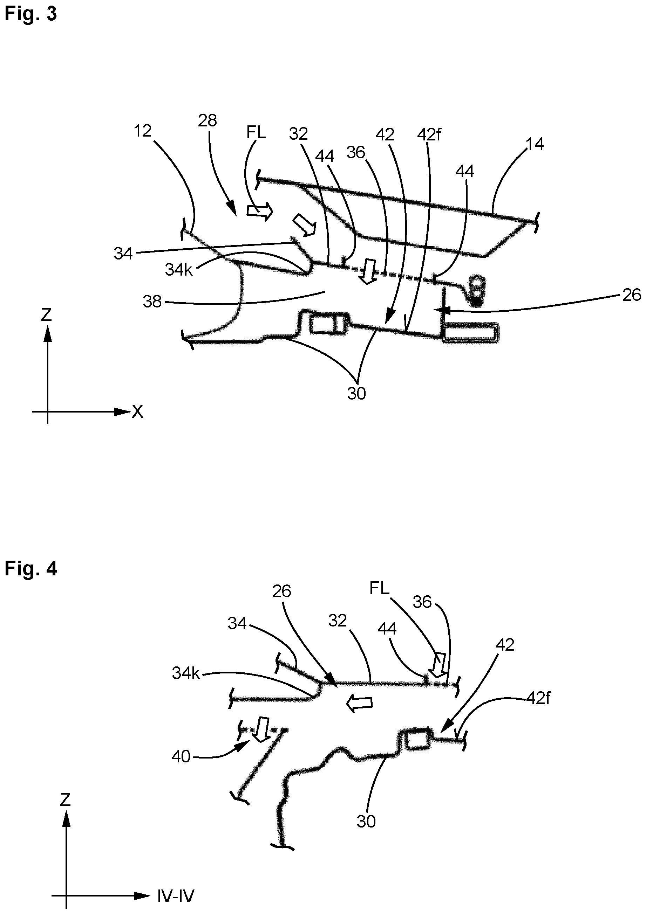

Fig. 3 zeigt einen vereinfachten Querschnitt entsprechend der Schnittlinie III-III der Fig. 1 und 2.

In dieser Darstellung ist die Fronthaube 14 ersichtlich, die oberhalb des Wasserkastens 26 angeordnet ist. Der Wasserkasten 26 weist das bereits aus der Fig. 2 ersichtliche Deckelelement 32 auf. In dieser Darstellung ist auch das bereits erwähnte Bodenelement 30 sichtbar dargestellt.

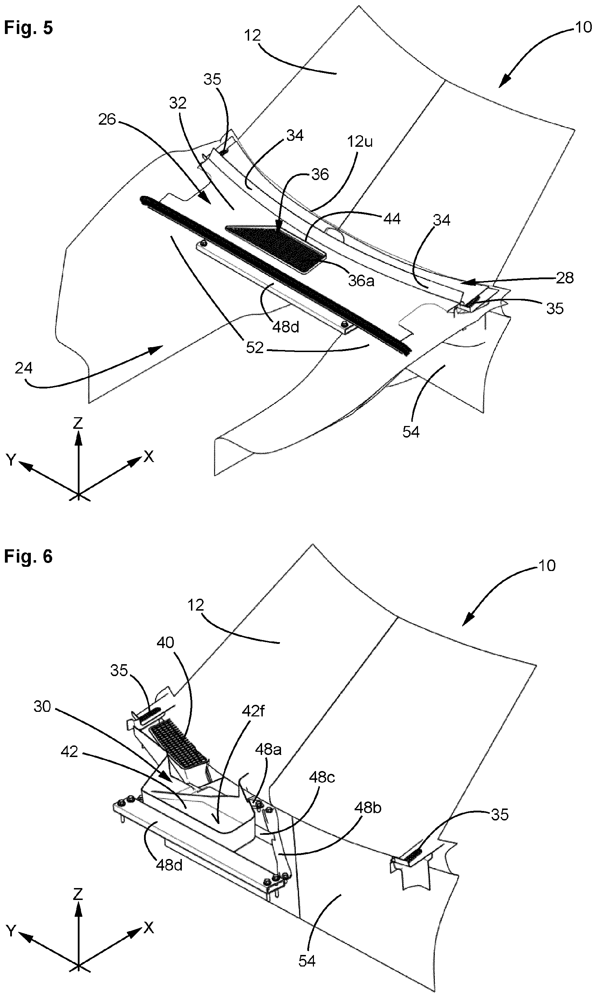

Zwischen dem Deckelelement 32 und dem Bodenelement 30 ist ein Ansaugraum 38 für Frischluft gebildet. Frischluft tritt dabei durch die Ansaugöffnung 36 in den Wasserkasten 26 ein und wird innerhalb des Ansaugraums 38 zu einem Frischlufteinlass 40 (Fig. 4 und Fig. 6) einer nicht näher dargestellten Klimatisierungseinheit geleitet. In dem Bodenelement 30 ist ein Wasserauffangbecken 42 mit einer Bodenfläche 42f ausgebildet.

Aus der Fig. 3 ist ferner ersichtlich, dass die entlang der Windschutzscheibe 12 verlaufende Schwallwand 34 einen zur Windschutzscheibe zugewandten Schwallwandkanal 34k zur Ableitung von Wasser zu beiden Seiten des Kraftfahrzeugs aufweist. Der Schwallwandkanal 34k kann bezogen auf die Windschutzscheibe 12 beispielweise konkav ausgebildet sein.

Bezogen auf die Fig. 2 ist ersichtlich, dass die Ansaugöffnung 36 bezogen auf die Breitenrichtung Y des Kraftfahrzeugs 10 beidseits der Längsmittelachse MA des Kraftfahrzeugs 10 ausgebildet ist. Anders ausgedrückt kann auch davon gesprochen werden, dass die Ansaugöffnung 36 des Wasserkastens 26 bzw. des Deckelelements 32 bezogen auf die Breitenrichtung Y mittig bzw. zentral angeordnet ist. Mit anderen Worten schneidet eine gedachte X-Z-Ebene, die die Längsmittelachse MA enthält, eine die Ansaugöffnung 36 enthaltende, gedachte Ebene.

Aus der Fig. 3 und der Fig. 5 ist ersichtlich, dass die Ansaugöffnung 36 einen nach oben hin, insbesondere in Z-Richtung, vorstehenden, umlaufenden Randvorsprung 44 aufweist. Der Randvorsprung 44 kann auch als umlaufender Steg bezeichnet werden.

Fig. 4 zeigt eine vereinfachte Schnittansicht etwa entlang der Schnittlinie IV-IV der Fig. 2. Auch aus dieser Schnittansicht ist der Ansaugraum 38 ersichtlich, der durch das Deckelelement 32 und das Bodenelement 30 begrenzt wird. Frischluft FL tritt durch die Ansaugöffnung 36 ein und wird seitlich zu dem bereits oben erwähnten Frischlufteinlass 40 einer nicht gezeigten Klimatisierungseinheit geleitet.

Aus der Zusammenschau der Fig. 3 und 4 ist auch ersichtlich, dass die Bodenfläche 42f des Wasserauffangbeckens 42 in Längsrichtung X und in Breitenrichtung Y der Kraftfahrzeugs 10 geneigt verläuft.

Weitere in der Fig. 4 dargestellte Elemente sind mit den gleichen Bezugszeichen gekennzeichnet wie in den Figuren davor, so dass auf eine weitere Beschreibung dieser Elemente hier weggelassen werden kann.

Die Figuren 5 und 6 zeigen das Kraftfahrzeug 10 mit Windschutzscheibe 12 in einer vereinfachten Perspektivdarstellung.

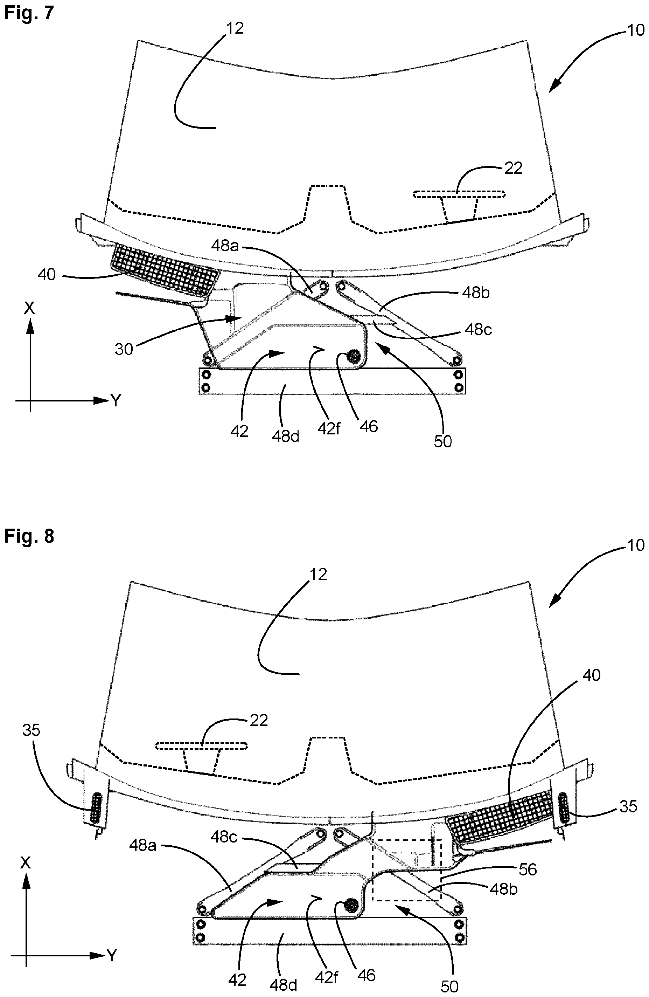

In Fig. 5 ist das Deckelelement 32 des Wasserkastens 26 ersichtlich. In der Fig. 6 ist das Deckelelement 32 nicht dargestellt, so dass der Blick auf das Bodenelement 30 freigegeben ist. Eine Draufsicht ohne Deckelelement 32 ist aus der Fig. 7 ersichtlich. Die nachfolgende Beschreibung bezieht sich auf eine Zusammenschau der Fig. 5 bis 7.

Es ist ersichtlich, dass die Ansaugöffnung 36 und die Bodenfläche 42f des Wasserauffangbeckens 42 im Wesentlich die gleiche Form aufweisen. Insbesondere weisen sie eine trapezförmige Ausgestaltung auf. Dies wird auch augenscheinlich aus der Zusammenschau von Fig. 2 und Fig. 7.

Ferner ist ersichtlich, dass die Ansaugöffnung 36 und das Wasserauffangbecken 42 übereinander angeordnet sind, insbesondere derart, dass die Ansaugöffnung 36 und die Bodenfläche 42f fluchtend oder im Wesentlichen kongruent zueinander angerichtet sind.

Insbesondere aus der Fig. 7 ist ersichtlich, dass in einem Eckbereich der Bodenfläche 42f ein Ablauf 46 angeordnet ist zum Abführen von in dem Wasserauffangbecken 42 aufgefangenem Wasser. Der Ablauf 46 kann dabei insbesondere an einem tiefsten Punkt oder Bereich der geneigten Bodenfläche 42f angeordnet sein. Der Ablauf 46 kann beispielweise als Rückschlagtülle ausgebildet sein.

Vor der Windschutzscheibe 12 sind mehrere Streben 48a, 48b, 48c, 48d angeordnet. Die Streben 48a, 48b, 48c, 48d sind geneigt zueinander ausgerichtet sind, so dass zwischen sich ein vieleckiger Aufnahmeraum 50 gebildet ist bzw. definiert wird. Der Aufnahmeraum 50 kann insbesondere dreieckig oder viereckig sein, wobei beispielsweise durch alle vier Streben 48a, 48b, 48c, 48d ein trapezförmiger Aufnahmeraum 50 festgelegt ist.

Das Bodenelement 30 des Wasserkastens 26 ist durch die Streben 48a, 48b, 48c, 48d abgestützt, wobei die Bodenfläche 42f des Wasserauffangbeckens 42 in dem durch die Streben 48a, 48b, 48c, 48d gebildeten Aufnahmeraum 50 angeordnet ist.

Die Streben können auch wie folgt bezeichnet werden: Domstrebe 48d, rechte A-Strebe 48a, linke A-Strebe 48b und Verbindungsstrebe 48c.

Die Form des Wasserauffangbeckens 42 bzw. der Bodenfläche 42f nimmt insbesondere die durch die rechte A-Strebe 48a, die Domstrebe 48d und die Verbindungstrebe 48c bereitgestellte Geometrie auf. Dabei ist der zwischen den Streben 48a, 48c, 48d gebildete Aufnahmeraum 50 nur teilweise von dem Wasserauffangbecken 42 beansprucht.

Die Streben 48a, 48b, 48c, 48d sind insbesondere an anderen Karosserieteilen des Kraftfahrzeugs 10 abgestützt bzw. mit diesen verbunden, wie etwa seitlichen Federbeindomen 52 (in Fig. 5 stark vereinfacht illustriert) oder/und im Bereich eines Querträgers oder einer Trennwand 54 (Fig. 5), die den Fahrzeuginnenraum von dem Motorraum trennt.

Während die Fig. 1 bis 7 ein Kraftfahrzeug mit linksseitiger Lenkung (Lenkrad 22) zeigen, ist in Fig. 8 eine Ausgestaltung des Bodenelements 30 für ein rechtsseitig gelenktes (Lenkrad 22) Kraftfahrzeug gezeigt.

Aus der Zusammenschau der Fig. 7 und 8 ist ersichtlich, dass die Bodenfläche 42f des Bodenelements 30 eine Form aufweist, die bei einem linksgelenkten Kraftfahrzeug 10 (Fig. 1 bis 7) und bei einem rechtsgelenkten Kraftfahrzeug 10 (Fig. 8) im Wesentlichen gleich, insbesondere identisch ist. Insbesondere kann die Bodenfläche 42f bzw. das Wasserauffangbecken 42 des Bodenelements 30 des Wasserkastens 26 relativ zu den Streben 48a, 48b, 48c, 48d gleich positioniert sein.

In Bezug auf die Fig. 8 wird noch darauf hingewiesen, dass das Bodenelement 30 des Wasserkastens 26 derart ausgebildet sein kann, dass es oberhalb eines vor den Windschutzscheibe 12 angeordneten Bremssystems 56 (vereinfacht als gestricheltes Rechteck dargestellt) des Kraftfahrzeugs 10 angeordnet ist. Die Fig. 8 ist dabei rein beispielhaft zu verstehen, weil das Bodenelement 30 auch in einer Ausführung gemäß Fig. 7 so ausgebildet ist, dass es oberhalb von weiteren im Bauraum 24 vor der Windschutzscheibe 12 aufgenommenen Komponenten angeordnet ist.

Unter Bezugnahme auf die Fig. 7 und 8 wird darauf hingewiesen, dass ein freier Bereich des zwischen den Streben 48a, 48c, 48d gebildeten Aufnahmeraum 50, der nicht von dem Wasserauffangbecken 42 beansprucht wird, als Zugangsöffnung für eine darunter liegende Komponente des Kraftfahrzeugs 10 nutzbar ist, beispielsweise eine Öffnung für einen Flüssigkeitsbehälter, wie etwa einen Bremsflüssigkeitsbehälter des Bremssystems 56.

Mittels des oben beschriebenen Wasserkastens 26 kann ein mehrstufiges Wasserabscheidekonzept bereitgestellt werden. Dabei wird in einer ersten Stufe Wasser mittels der Schwallwand 34 abgeführt. **In** einer zweiten Stufe wird Wasser, das durch die Ansaugöffnung 36 in den Ansaugraum 38 gelangt, in dem Wasserauffangbecken 42 zurückgehalten und abgeführt.

Als dritte Stufe ist der Frischlufteinlass 40 bezogen auf das Wasserauffangbecken 42 in Höhenrichtung Z höher angeordnet. Insbesondere liegt ein den Frischlufteinlass 40 abdeckendes Gitter höher als die Bodenfläche 42f. Zwischen dem Frischlufteinlass 40 und dem Wasserauffangbecken 42 ist eine Art Graben ausgebildet, der dazu dient, Wasser abzuscheiden, das insbesondere aufgrund der Luftströmung bis hinter das Wasserauffangbecken 42 gesaugt wurde. Das bis dahin gelangt Wasser kann außerhalb des Frischlufteinlasses bzw. unterhalb von diesem abfließen, beispielweise durch eine Rückschlagtülle.

Aus der Zusammenschau der Fig. 1 bis 8 ist auch ersichtlich, dass der hier beschriebene Wasserkasten 26 dazu dient eine in Bezug auf die Ausdehnung in Höhenrichtung Z flache Struktur zum Ansaugen von Frischluft bereitzustellen. Ferner ist der Wasserkasten 26 so angeordnet, dass ein Fußgängerschutz-Deformationsbereich für den Frischluftstrom genutzt wird

Es wird allgemein darauf hingewiesen, dass in den jeweiligen Figuren 1 bis 8 mehr Bezugszeichen dargestellt sein können, als in Bezug auf diese Figur im Beschreibungstext enthalten sind. Eine zu einem Bezugszeichen vorhandenen Beschreibung zu einer Figur kann auch für eine andere Figur übernommen werden bzw. gelten, wenn das betreffende Bezugszeichen nur in der anderen Figur gezeigt, aber nicht gesondert beschrieben ist.

## Patentansprüche

1. Kraftfahrzeug (10) mit verbrennungsmotorischem oder/und elektrischem Antrieb, wobei das Kraftfahrzeug (10) aufweist:
- eine Windschutzscheibe (12);
- einen vor der Windschutzscheibe (12) angeordneten Wasserkasten (26), der dazu eingerichtet ist, in einem Übergangsbereich (28) von der Windschutzscheibe (12) und einer Fronthaube (14) anfallendes Wasser aufzufangen und abzuleiten;
wobei der Wasserkasten (26) ein Bodenelement (30) und ein Deckelelement (32) aufweist, die einen Ansaugraum (38) für Frischluft (FL) bilden;
- einen Frischlufteinlass (40) einer Klimatisierungseinheit, der mit dem Ansaugraum (38) in Fluidverbindung steht;
wobei das Deckelement (32) eine entlang der Windschutzscheibe (12) verlaufende Schwallwand (34) aufweist mit einem zur Windschutzscheibe (12) zugewandten Schwallwandkanal (34k) zur Ableitung von Wasser zu beiden Seiten des Kraftfahrzeugs (10);
wobei in dem Deckelelement (32) eine Ansaugöffnung (36) für Frischluft (FL) ausgebildet ist; und
wobei in dem Bodenelement (30) ein Wasserauffangbecken (42) mit einer Bodenfläche (42f) ausgebildet ist;
**dadurch gekennzeichnet dass**
die Ansaugöffnung (36) bezogen auf eine Breitenrichtung (Y) des Kraftfahrzeugs (10) beidseits einer Längsmittelachse (MA) des Kraftfahrzeugs (10) ausgebildet ist.

2. Kraftfahrzeug (10) nach Anspruch 1, **dadurch gekennzeichnet, dass** die Ansaugöffnung (36) einen nach oben hin vorstehenden, umlaufenden Randvorsprung (44) aufweist.

3. Kraftfahrzeug (10) nach Anspruch 1 oder 2, **dadurch gekennzeichnet, dass** die Ansaugöffnung (36) und die Bodenfläche (42f) des Wasserauffangbeckens (42) im Wesentlichen die gleiche Form aufweisen, insbesondere eine trapezförmige Ausgestaltung aufweisen.

4. Kraftfahrzeug (10) nach einem der vorhergehenden Ansprüche, **dadurch gekennzeichnet, dass** die Ansaugöffnung (36) und das Wasserauffangbecken (42) übereinander angeordnet sind, insbesondere derart, dass die Ansaugöffnung (36) und die Bodenfläche (42f) fluchtend oder im Wesentlichen kongruent zueinander angerichtet sind.

5. Kraftfahrzeug (10) nach einem der vorhergehenden Ansprüche, **dadurch gekennzeichnet, dass** die Bodenfläche (42f) in Längsrichtung (X) und in Breitenrichtung (Y) des Kraftfahrzeugs (10) geneigt verläuft.

6. Kraftfahrzeug (10) nach Anspruch 4, **dadurch gekennzeichnet, dass** an einem tiefsten Punkt, insbesondere in einem Eckbereich der Bodenfläche (42f) ein Ablauf (46) angeordnet ist zum Abführen von in dem Wasserauffangbecken (42) aufgefangenem Wasser.

7. Kraftfahrzeug (10) nach einem der vorhergehenden Ansprüche, **dadurch gekennzeichnet, dass** vor der Windschutzscheibe (12) mehrere Streben (48a, 48b, 48c, 48d) angeordnet sind, die geneigt zueinander ausgerichtet sind und zwischen sich einen vieleckigen Aufnahmeraum (50) definieren.

8. Kraftfahrzeug (10) nach Anspruch 7, **dadurch gekennzeichnet, dass** das Bodenelement (30) durch die Streben (48a, 48b, 48c, 48d) abgestützt ist und dass die Bodenfläche (42f) in dem durch die Streben (48a, 48b, 48c, 48d) gebildeten Aufnahmeraum (50) angeordnet ist.

9. Kraftfahrzeug (10) nach einem der vorhergehenden Ansprüche, **dadurch gekennzeichnet, dass** die Bodenfläche (42f) des Bodenelements (30) eine Form aufweist, die bei einem linksgelenkten Kraftfahrzeug und bei einem rechtsgelenkten Kraftfahrzeug im Wesentlichen gleich, insbesondere identisch ist.
